(19)

Europäisches Patentamt

European Patent Office

Office européen des brevets

(11) **EP 4 335 834 A1**

(12) **EUROPEAN PATENT APPLICATION**
published in accordance with Art. 153(4) EPC

(43) Date of publication:
**13.03.2024 Bulletin 2024/11**

(21) Application number: **22799110.6**

(22) Date of filing: **03.05.2022**

(51) International Patent Classification (IPC):
*C04B 35/584* (2006.01)   *C04B 35/64* (2006.01)
*C04B 35/632* (2006.01)

(52) Cooperative Patent Classification (CPC):
**C04B 35/584; C04B 35/591; C04B 35/593;
C04B 35/632; C04B 35/64**

(86) International application number:
**PCT/KR2022/006365**

(87) International publication number:
**WO 2022/235067 (10.11.2022 Gazette 2022/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.05.2021 KR 20210058595**

(71) Applicant: **Amotech Co., Ltd.
Incheon 21629 (KR)**

(72) Inventors:
• **PARK, Kyu Hwan
Incheon 21629 (KR)**
• **CHEONG, Hun
Incheon 21629 (KR)**

(74) Representative: **Piticco, Lorena
Isler & Pedrazzini AG
Giesshübelstrasse 45
Postfach 1772
8027 Zürich (CH)**

(54) **METHOD FOR MANUFACTURING SILICON NITRIDE SUBSTRATE AND SILICON NITRIDE SUBSTRATE MANUFACTURED THEREBY**

(57)    Provided is a method for manufacturing a silicon nitride substrate. A method for manufacturing a silicon nitride substrate according to an exemplary embodiment of the present invention comprises the steps of: preparing a ceramic composition containing a metal silicon powder and a crystalline phase control powder containing a rare earth element-containing compound and a magnesium-containing compound; manufacturing a sheet-shaped molded body of a slurry prepared by mixing a solvent and an organic binder with the ceramic composition; and performing heat treatment including a nitrification section where heat treatment is performed at a first temperature in the range of 1300-1500°C together with the application of nitrogen gas to the molded body at a predetermined pressure and a sintering section where heat treatment is performed at a second temperature in the range of 1700-1900°C. Therefore, the present invention, compared with the conventional art, can reduce the manufacturing time and manpower and thus is suitable for mass production. Additionally, the implemented silicon nitride substrate has excellent mechanical strength since the melting and elution of silicon can be minimized or prevented during nitrification. Furthermore, sintering is completed after entering the sintering section while the rapid transition to a beta phase is suppressed, and thus the transition to the beta phase, the acceleration of beta phase growth, and uniform growth can be attained, leading to more improved thermal conductivity. Furthermore, thermal conductivity and mechanical strength are uniform regardless of the site on the substrate, so that a higher-quality substrate can be attained.

【FIG. 1】

EP 4 335 834 A1

**Description**

CROSS-REFERENCE TO RELATED APPLICATION

This application claims priority to and the benefit of Korean Patent Application No. 10-2021-0058595, filed on May 6, 2021, the disclosure of which is incorporated herein by reference in its entirety.

[Technical Field]

The present invention relates to a method for manufacturing a silicon nitride substrate and a silicon nitride substrate manufactured therefrom.

[Background Art]

The silicon nitride sintered body is excellent in wear resistance, heat resistance, low thermal expansion resistance, thermal shock resistance and corrosion resistance to metals, and it has been conventionally used for various structural members such as gas turbine members, engine members, steelmaking machine members and the like. In addition, due to its high insulating properties and excellent heat dissipation properties, it is used as a material for electrical components such as ceramic substrates and the like.

The silicon nitride substrate has been conventionally manufactured by a two-step method of manufacturing silicon nitride powder and then sintering the manufactured silicon nitride powder. The reason why such a method is adopted is that it is difficult to implement a substrate that expresses uniform physical properties, regardless of the position during nitrification and sintering in the form of a substrate, and in order to solve this problem, the method of first manufacturing silicon nitride powder to have uniform physical properties in powder form and then using the same to manufacture a substrate has been widely used.

However, in the above two-step method, after nitrification, the nitrified body must be cooled/pulverized, molded again to have a predetermined shape and then sintered, and therefore, the manufacturing time takes more than 50 hours, and there is a concern that man-hours will increase.

Accordingly, the situation is that research on a method for manufacturing a silicon nitride substrate that can dramatically reduce the manufacturing time while also reducing man-hours, and that the implemented silicon nitride substrate has excellent thermal conductivity and mechanical strength while exhibiting these physical properties uniformly at each location of the substrate is urgently needed.

[Related Art Documents]

[Patent Documents]

(Patent Document 1) Korean Patent Application Laid-Open No. 10-1997-7000234

[Disclosure]

[Technical Problem]

The present invention has been devised in view of the above points, and it is possible to manufacture a silicon nitride substrate by reducing the manufacturing time and man-hours compared to the conventional silicon nitride substrate manufacturing method, and the present invention is directed to providing a method for manufacturing a silicon nitride substrate in which the implemented silicon nitride substrate has excellent flatness, thermal conductivity and mechanical strength, and at the same time, these physical properties are uniformly expressed at each position of the substrate, and a silicon nitride substrate manufactured therefrom.

[Technical Solution]

The present invention has been devised in view of the above points, and provides a method for manufacturing a silicon nitride ($Si_3N_4$) substrate, including the steps of preparing a ceramic composition including a metal silicon powder and a crystalline phase control powder including a rare earth element-containing compound and a magnesium-containing compound; manufacturing a sheet-shaped molded body of a slurry prepared by mixing a solvent and an organic binder with the ceramic composition; and performing heat treatment including a nitrification section where heat treatment is performed at a first temperature in the range of 1,300 to 1,500°C together with the application of nitrogen gas to the molded body at a predetermined pressure and a sintering section where heat treatment is performed at a second temperature in the range of 1,700 to 1,900°C.

According to an exemplary embodiment of the present invention, the metal silicon powder may be a dry-ground polycrystalline metal silicon scrap or single-crystal silicon wafer scrap in order to minimize contamination with metal impurities during grinding.

In addition, the metal silicon powder may have a resistivity of 1 to 100 $\Omega \cdot$cm.

In addition, the polycrystalline metal silicon scrap or single-crystal metal silicon wafer scrap may have a purity of 99% or more.

In addition, the rare earth element-containing compound may be yttrium oxide, and the magnesium-containing compound may be magnesium oxide, and wherein the ceramic composition may include 2 to 5 mol% of yttrium oxide and 2 to 10 mol% of magnesium oxide.

In addition, the metallic silicon powder may have an average particle diameter of 0.5 to 4 $\mu$m, the rare earth element-containing compound powder may have an average particle diameter of 0.1 to 1 $\mu$m, and the magnesium-containing compound powder may have an average particle diameter of 0.1 to 1 $\mu$m.

In addition, the heat treatment step may be performed continuously from the nitrification section to the sintering section.

In addition, a section in which heat treatment is performed to a temperature lower than the first temperature or cooling is performed to a temperature lower than the first temperature may not be included between the nitrification section and the sintering section.

In addition, the heat treatment step may be performed at a temperature increase rate of 0.1 to 2°C/min while applying nitrogen gas at a pressure of 0.1 to 0.2 MPa from 1,000 $\pm$ 20°C to the first temperature.

Further, in the nitrification section, nitrogen gas may be applied at a pressure of 0.1 to 0.2 MPa, and the nitrification section may be performed for 2 to 10 hours.

In addition, the pressure of nitrogen gas applied from 1,000 $\pm$ 20°C to the first temperature may be lower than the pressure of nitrogen gas applied in the nitrification section.

In addition, the method may further include a first contraction section which is heated at a rate of 0.1 to 10.0°C/min under a nitrogen gas pressure of 0.15 to 0.30 MPa from the first temperature to 1,700 $\pm$ 20°C, and a second contraction section which is heated from 1,700 $\pm$ 20°C to the second temperature at a rate of 1 to 10°C/min under a nitrogen gas pressure of 0.80 to 0.98 MPa between the nitrification section and the sintering section.

In addition, the present invention provides a silicon nitride substrate, which is manufactured through the method according to the present invention, wherein the thermal conductivity is 75W/mK or more, and the 3-point bending strength is 700 MPa or more.

[Advantageous Effects]

Compared with the conventional art, the method for manufacturing a silicon nitride substrate according to the present invention can reduce the manufacturing time and manpower and thus is suitable for mass production. Additionally, the implemented silicon nitride substrate has excellent mechanical strength since the melting and elution of silicon can be minimized or prevented during nitrification. Furthermore, sintering is completed after entering the sintering section while the rapid transition to a beta phase is suppressed, and thus the transition to the beta phase, the acceleration of beta phase growth, and uniform growth can be attained, leading to more improved thermal conductivity. Moreover, thermal conductivity and mechanical strength are uniform regardless of the site on the substrate, so that a higher-quality substrate can be attained.

[Description of Drawings]

FIG. 1 is a graph showing changes in temperature conditions over time during a heat treatment step included in an exemplary embodiment of the present invention; and
FIG. 2 is a mimetic diagram of a cross-section in which the stacking state of several sheets of molded bodies is changed due to movement or re-vacuum before heat treatment (a) and after the nitrification process according to an exemplary embodiment of the present invention.

[Modes of the Invention]

Hereinafter, the exemplary embodiments of the present invention will be described in detail so that those of ordinary skill in the art to which the present invention pertains can easily practice the invention. The present invention may be embodied in many different forms and is not limited to the exemplary embodiments described herein.

The silicon nitride substrate according to an exemplary embodiment of the present invention may be manufactured by including the steps of preparing a ceramic composition including a metal silicon powder and a crystalline phase control powder including a rare earth element-containing compound and a magnesium-containing compound; manufacturing a sheet-shaped molded body of a slurry prepared by mixing a solvent and an organic binder with the ceramic composition; and performing heat treatment including a nitrification section where heat treatment is performed at a first temperature in the range of 1,300 to 1,500°C together with the application of nitrogen gas to the molded body at a predetermined pressure and a sintering section where heat treatment is performed at a second temperature in the range of 1,700 to 1,900°C.

First of all, the step for preparing a ceramic composition will be described.

The ceramic composition may be prepared by mixing a ceramic composition including a metal silicon powder and a crystalline phase control powder including a rare earth element-containing compound and a magnesium-containing compound.

The metallic silicon powder, which is the main subject as the raw material powder, may be used without limitation in the case of silicon nitride powder or metallic silicon powder used for manufacturing a silicon nitride compact through direct nitrification. For example, the metal silicon powder may be a polycrystalline metal silicon scrap or single-crystal silicon wafer scrap. The polycrystalline metallic silicon scrap may be a by-product of polycrystalline metallic silicon used for manufacturing jigs for semiconductor processes or solar panels, and the single-crystal silicon wafer scrap may also be a by-product during silicon wafer manufacturing, and thus, these scraps, which are byproducts, may be used as raw material powder and through this, it is possible to lower the manufacturing cost.

In addition, the polycrystalline metal silicon scrap or single-crystal silicon wafer scrap may have a purity of 99% or more, and through this, it may be more advantageous in ensuring thermal conductivity and mechanical strength of the implemented silicon nitride substrate.

In addition, the metal silicon powder may have a resistivity of 1 to 100 Q cm, which may be more advantageous in terms of manufacturing a silicon nitride substrate having physical properties desired by the present invention.

Meanwhile, the metal silicon powder used as the raw material powder may be preferably a polycrystalline metal silicon scrap or single-crystal silicon wafer scrap that is ground to a predetermined size. In this case, in order to prevent contaminants such as metal impurities due to grinding from being mixed into the raw material powder, the grinding may be performed by using a dry grinding method, and specifically, it may be powdered by using dry grinding methods such as disk mill, pin mill, jet mill and the like. If the contaminants are contained in the metallic silicon powder, there is a risk of increasing the manufacturing time and cost, which requires further washing processes such as acid washing in order to remove the contaminants. In this case, the average particle diameter of the ground metal silicon powder may be 0.5 to 4 $\mu$m, and more preferably, 2 to 4 $\mu$m, and if the average particle diameter is less than 0.5 $\mu$m, it may be difficult to implement through the dry grinding method, and there is a concern that the possibility of contaminants mixing therein due to fine powder, and densification may be difficult during sheet casting. In addition, if the average particle diameter of the metallic silicon powder is more than 4 $\mu$m, nitrification is not easy, and thus, there is a concern that a non-nitrified portion may exist, and densification of the finally implemented substrate may be difficult.

Meanwhile, silicon nitride, which is the material of the substrate to be implemented, is difficult for self-diffusion and may be thermally decomposed at high temperature, and thus, it is not easy to sinter as a substrate for reasons such as limited sintering temperature, and it may be difficult to implement a dense and uniformly nitrified substrate. Therefore, in order to solve these difficulties and improve the physical properties of a silicon nitride substrate by removing impurities such as oxygen and the like, a ceramic composition obtained by mixing a metallic silicon powder with a crystalline phase control powder is used as the raw material powder. For example, for the crystalline phase control powder, a rare earth element-containing compound containing, an alkaline earth metal oxide or a combination thereof may be used, and specifically, at least one selected from the group consisting of magnesium oxide (MgO), yttrium oxide ($Y_2O_3$), gadolinium oxide ($Gd_2O$), holmium oxide ($Ho_2O_3$), erbium oxide ($Er_2O_3$), irtebium oxide ($Yb_2O_3$) and dysprosium oxide ($Dy_2O_3$) may be used. However, the present invention essentially contains magnesium oxide and yttrium oxide in the crystalline phase control powder in order to make it easier to sinter and control the crystalline phase of the silicon nitride substrate, and the magnesium oxide and yttrium oxide have the advantages of making the manufactured silicon nitride substrate more dense and having a higher density, and further improving the thermal conductivity of a substrate by reducing the amount of residual grain boundary phases during sintering.

In addition, the ceramic composition containing silicon may further contain a strength-enhancing powder including at least any eon of iron oxide ($Fe_2O_3$) and titanium oxide ($TiO_2$) in order to improve mechanical strength due to thermal stress or thermal shock according to the severe semiconductor manufacturing process, and preferably, the strength-enhancing powder may contain both of iron oxide and titanium oxide.

In particular, the heat treatment step to be described below proceeds in one step through continuous heat treatment in one sintering furnace without nitrification and sintering in a separate furnace, and the combination of magnesium oxide and yttrium oxide, or the combination of magnesium oxide, yttrium oxide, iron oxide and titanium oxide may be useful for nitrifying and sintering metallic silicon powder to silicon nitride. That is, it is not a method in which nitrification and sintering are carried out in a separate furnace or nitrification is performed followed by cooling and sintering is performed, but in a one-step process that proceeds from nitrification to sintering in one step after charging the silicon-containing ceramic composition into the furnace, it may not be easy to implement a densified sintered body that is uniformly nitrified to the inside of the molded body without silicon eluting, and the above-described crystalline control powder contained in the ceramic composition or the strength-improving powder included together with the crystalline control powder may be useful in implementing a uniformly nitrified and densified sintered body. To this end, preferably, the ceramic composition may include 2 to 5 mol% of yttrium oxide and 2 to 10 mol% of magnesium oxide (preferably, 4 to 8 mol%). In addition, when iron oxide and titanium oxide are further included, 0.1 to 3 mol% of iron oxide and 1 to 5 mol% of titanium oxide may be further included based on the total number of moles of the ceramic composition, and through this, even by performing a one-step nitrification-sintering process, it is possible to have further improved mechanical strength. If yttrium oxide is less than 2 mol%, when sintering a substrate, it may be difficult to implement a densified substrate, and it may be difficult to capture oxygen on grain boundaries, which may result in an increased amount of dissolved oxygen, and it may lower the thermal conductivity of the sintered substrate and lower the mechanical strength thereof. In addition, if yttrium oxide is more than 5 mol%, there is a concern that the thermal conductivity of the silicon nitride substrate implemented as the grain boundary phase increases, and the fracture toughness decreases. In addition, if magnesium oxide is less than 2 mol%, both of the thermal conductivity and mechanical strength of the implemented silicon nitride substrate may be low, there is a risk of silicon being eluted during nitrification, and it may be difficult to manufacture a densified substrate. In addition, if magnesium oxide is more than 10 mol%, during sintering, the amount of magnesium remaining at the grain boundaries increases, and as a result, it may lower the thermal conductivity of the implemented substrate, make sintering difficult, and fracture toughness may decrease. In addition, if iron oxide is less than 0.1 mol% and/or titanium oxide is less than 1 mol%, the improvement of mechanical strength may be minimal. In addition, if iron oxide is more than 3 mol% and/or titanium oxide is more than 5 mol%, there is a concern that the mechanical strength of the sintered body may decrease.

In addition, preferably, the yttrium oxide and magnesium oxide may be included in the composition at a molar ratio of 1: 1.5 to 2.0, which may be more advantageous in achieving the objects of the present invention.

In addition, the rare earth element-containing compound powder may have an average particle diameter of 0.1 to 1 $\mu$m, and the magnesium-containing compound powder may have an average particle diameter of 0.1 to 1 $\mu$m, which may be more advantageous to achieve the objects of the present invention.

Next, the step of mixing the prepared ceramic composition with a solvent and an organic binder to form a slurry, and then preparing a sheet-shaped molded body is performed.

The solvent and organic binder may be used without limitation in the case of known solvents and organic binders that are used in manufacturing a ceramic substrate or a ceramic green sheet. Specifically, the solvent serves to adjust the viscosity by dissolving the organic binder and dispersing the ceramic composition, and for example, terpineol, dihydro terpineol (DHT), dihydro terpineol, dihydro terpineol acetate (DHTA), Butyl Carbitol Acetate (BCA), ethylene glycol, ethylene, isobutyl alcohol, methyl ethyl ketone, butyl carbitol, texanol (2,2,4- trimethyl-1,3-pentanediol monoisobutyrate), ethylbenzene, isopropylbenzene, cyclohexanone, cyclopentanone, dimethyl sulfoxide, diethyl phthalate, toluene, mixtures thereof and the like may be used. In this case, it is preferable to mix 50 to 100 parts by weight of the solvent based on 100 parts by weight of the ceramic composition. If the content of the solvent is less than 50 parts by weight, the viscosity of the slurry is high such that it may be difficult to manufacture a molded body, and particularly, it may be difficult to control the thickness of the molded body. In addition, if the content of the solvent is more than 100 parts by weight, the viscosity of the slurry is too thin such that it may take a long period of time to dry, and it may be difficult to control the thickness of the molded body.

In addition, the organic binder functions to combine the ceramic compositions in a predetermined shape in the prepared slurry. The organic binder is preferably mixed in an amount of 5 to 20 parts by weight based on 100 parts by weight of the ceramic composition. The organic binder may be a cellulose derivative such as ethyl cellulose, methyl cellulose, nitrocellulose or carboxycellulose, or a polymer resin such as polyvinyl alcohol, acrylic acid ester, methacrylic acid ester or polyvinyl butyral, and when the molded body is manufactured by the tape casting method, polyvinyl butyral may be preferably used as the organic binder.

Meanwhile, the slurry may further include a known material contained in a slurry for manufacturing a molded body using a ceramic, such as a dispersant and a plasticizer, and the present invention is not particularly limited thereto.

The prepared slurry may be prepared in a sheet shape, and in this case, the slurry may be implemented as a molded body by a known molding method. For example, the slurry may use a known method such as the tape casting method, but the present invention is not limited thereto.

Next, a heat treatment step is performed on the prepared molded body.

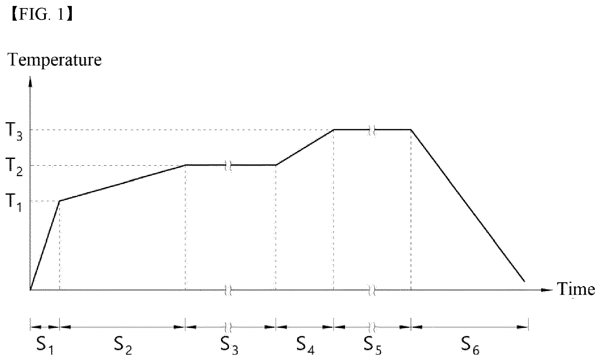

Referring to FIG. 1, the molded body undergoes a heat treatment step including a nitrification section ($S_3$) where the molded body is mounted in the sintering furnace and converted into silicon nitride ($Si_3N_4$) and a sintering section ($S_5$) for sintering the nitrified molded body, and the heat treatment step may further include temperature increase

sections ($S_1$, $S_2$) before the nitrification section ($S_3$), a temperature increase section ($S_4$) between the nitrification section ($S_3$) and the sintering section ($S_5$), and a cooling section ($S_6$) after the sintering section ($S_5$).

In the manufacturing process according to the present invention, in the heat treatment step, the nitrification process of nitrifying the molded body into a silicon nitride molded body and the sintering process of sintering the nitrified molded body into a substrate are all performed in one heat treatment step. The conventional silicon nitride substrate is generally implemented by a two-step method of preparing silicon powder into silicon nitride powder and then using silicon nitride powder to manufacture a silicon nitride substrate. However, in the two-step method, the cooling process and grinding process of the silicon nitride powder were further required until it is sintered after the preparation of the silicon nitride powder, and thus, the manufacturing time was long, and accordingly, the manufacturing cost was extended, and it was not suitable for mass production. Nevertheless, the reason for using such a two-step method is that silicon nitride powders having more uniform characteristics can be easily prepared when nitrifying on a small-sized powder, and this is advantageous in that the silicon nitride substrate also guarantees uniform characteristics.

The present invention breaks away from the conventional two-step method that was inevitably adopted to implement a substrate with uniform characteristics, and by performing both of the nitrification process and the sintering process by a one-step method which is a heat treatment step, a silicon nitride substrate is manufactured, and accordingly, the present invention has been achieved by implementing a silicon nitride substrate with uniform characteristics while dramatically shortening the manufacturing time.

The heat treatment step may be continuously performed from the nitrification section to the sintering section without interruption of the heat treatment. In addition, rather than nitrifying on the powder, since the molded body formed in the shape of the substrate is nitrified from the beginning and then sintered, it may not include a section for heat treatment at a temperature lower than the first temperature or cooling to a temperature lower than the first temperature between the nitrification section and the sintering section.

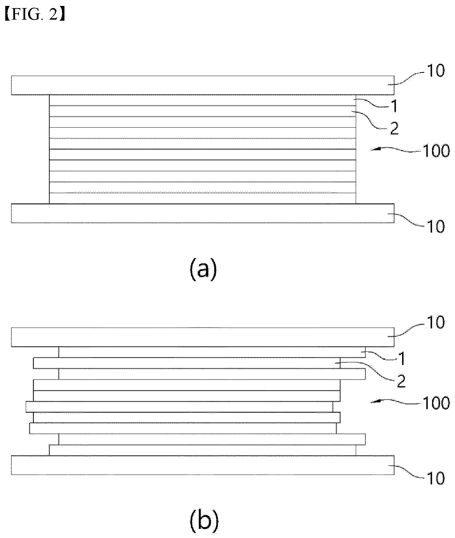

Meanwhile, the sheet-shaped molded body may be subjected to a heat treatment step in the state of the stacked body 100 in which several sheets of the molded body 1, 2 are stacked, as illustrated in (a) of FIG. 2. For example, the sheet-shaped molded body may be subjected to a heat treatment step in a state where two or more sheets are stacked. In this case, the stacked body 100 may perform a heat treatment step in a state of being disposed between BN plates 10. Further, in order to minimize or prevent sticking between molded bodies 1, 2 after heat treatment, a release agent, for example, BN powder, may be interposed between each of the stacked molded bodies 1, 2. In this way, it is inevitable in terms of productivity to perform the heat treatment step at a time in the stacked state of several sheets of molded body. However, if the heat treatment step is performed on several sheets of molded body and the heat treatment is interrupted between the nitrification process and the sintering process, for example, due to reasons such as movement of the stacked body according to a change of the furnace and/or vacuum, release and re-vacuum in the furnace such that the two processes cannot be continuously performed, the stacked state before heat treatment may not be maintained completely due to vibration occurring during movement of the stacked body or changes in atmospheric pressure during re-vacuum. In addition, as illustrated in (b) of FIG. 2, part or all of the molded body moves randomly in the horizontal direction, causing the side edges of the stacked body 100 to become jagged, which may cause bending of the ends of the molded body 1, 2. In addition, the bending phenomenon may lead to an increase in the defect rate, such as a decrease in curvature strength and a decrease in flatness. Therefore, the fact that the heat treatment step omits the movement of the stacked molded body due to changes in the furnace and is performed continuously without release and re-vacuum after vacuuming in the furnace not only has the advantages of not only reducing the manufacturing time, but also minimizing or preventing problems such as bending of the end of the silicon nitride substrate after the heat treatment step, and a decrease in curved strength and flatness.

When the heat treatment step is specifically described, the prepared molded body may be heat-treated by varying a predetermined temperature increase rate or temperature increase rate before reaching the nitrification section ($S_3$) after being mounted in the furnace. In this case, a degreasing process for removing organic compounds such as an organic binder in the molded body may be performed. However, if the content of the organic binder is small, degreasing may be omitted.

Specifically, in the degreasing process, after the prepared molded body is mounted in a degreasing furnace, it may be degreased by heating from the heat treatment start temperature to 900°C while varying a predetermined temperature increase rate or temperature increase rate. In addition, the degreasing process may be performed under a known atmosphere, for example, an atmospheric atmosphere and/or a nitrogen atmosphere, and the specific atmosphere may be appropriately selected in consideration of the type and content of the organic binder used. However, in consideration of the composition of the above-described molded body, the type and content of the organic binder and the like, the degreasing process is preferably performed under an atmospheric atmosphere in the temperature range of 450°C from the heat treatment start temperature, and in the temperature range of 450°C to 900°C, degreasing may be performed under a nitrogen atmosphere, which may be advantageous in minimizing or completely removing carbon components remaining in the molded body after the degreasing process. The heat treatment start temperature may be room temperature, for example, 20 to 25°C. In addition, during the heat treatment, the temperature may be raised at a rate of 2 to 8°C/min up to 450°C, and the temperature may be raised at a rate of 2 to 8°C/min from 450°C to 900°C, and the temperature increase rate to 450°C and the temperature increase rate from 450°C to 900°C may be the same or different from each other.

In addition, secondary degreasing may be further performed at 900 to 1,000°C on the molded body subjected to the degreasing process after the degreasing process is performed. In this case, in the section of 900 to 1,000°C, the temperature is preferably raised at a low rate of 1 to 10°C/min, and more preferably, 1 to 3°C/min, and the pressure may be preferably performed at 0.1 to 0.2 MPa, and more preferably, 0.14 to 0.17 MPa.

Afterwards, according to a preferred exemplary embodiment of the present invention, the temperature may be raised at a slow rate while applying nitrogen gas at a predetermined pressure from a predetermined temperature ($T_1$), specifically, from a temperature of 1,000 ± 20°C to a first temperature ($T_2$), and specifically, the temperature may be increased by applying nitrogen gas at a pressure of 0.1 to 0.2 MPa, and more preferably, 0.14 to 0.18 MPa. In addition, the temperature may be increased at a rate of 0.1 to 2.0°C/min, and more preferably, 0.5 to 1.0°C/min. If the nitrogen gas pressure is less than 0.1 MPa, even after passing through the nitrification section ($S_3$), nitrification does not completely occur in the molded body, and thus, a non-nitrified portion may exist. In addition, when the nitrogen gas pressure is more than 0.2 MPa, a phenomenon in which silicon is eluted may occur, and the thermal conductivity and mechanical strength of the substrate may be reduced. In addition, if the temperature increase rate from 1,000 ± 20°C to the first temperature is less than 0.1°C/min, the time required for the heat treatment step may be excessively extended. In addition, when the temperature increase rate is more than 2.0°C/min, silicon is eluted, and it may be difficult to manufacture a completely nitrified substrate with silicon nitride.

Meanwhile, after the molded body is mounted in the furnace, for example, there is no limit to the temperature increase rate up to a temperature of 800°C or less, and the temperature increase conditions applied when nitrifying a general silicon substrate or silicon powder may be followed, and for example, the temperature may be increased at a rate of 4°C/min to 30°C/min. In addition, when the temperature is increased in this section, the temperature may be increased under an inert gas or nitrogen gas atmosphere.

Afterwards, the nitrification process corresponding to the nitrification section ($S_3$), which is heat-treated at the first temperature ($T_2$), is performed while continuously applying heat to increase the temperature to the first temperature ($T_2$), and then applying nitrogen gas at a predetermined pressure. The first temperature ($T_2$) may be a predetermined temperature within the range of 1,300 to 1,500°C, and preferably, within the range of 1,400 to 1,500°C range. If the first temperature ($T_2$) is less than 1,300°C, nitrification may not occur uniformly. In addition, when the first temperature ($T_2$) is more than 1,500°C, the β crystal phase is rapidly formed, and thus, it may be difficult to densify the substrate.

In addition, for the pressure of nitrogen gas applied in the nitrification section ($S_3$), nitrogen gas may be applied at a pressure of 0.1 to 0.2 MPa, and more preferably, at a pressure of 0.14 to 0.18 MPa. If the pressure of nitrogen gas is less than 0.1 MPa, nitrification does not completely occur, and a non-nitrified portion may exist. In addition, if the pressure of nitrogen gas is more than 0.2 MPa, silicon may be eluted during the nitrification process, and the thermal conductivity and mechanical strength of the substrate may be reduced. In addition, the nitrification process may be performed over 2 to 10 hours, and more preferably, it may be performed for 1 to 4 hours. Meanwhile, the time of the nitrification process may be appropriately adjusted according to the first temperature ($T_2$).

In addition, according to an exemplary embodiment of the present invention, the pressure of nitrogen gas applied from the 1,000 ± 20°C to the first temperature may be lower than the pressure of nitrogen gas applied in the nitrification section, and through this, the nitrogen gas is more uniformly nitrified, and it may be advantageous to implement a substrate having excellent appearance and mechanical strength.

In addition, the heat treatment may be performed at a predetermined temperature increase rate up to the second temperature ($T_3$) at which the sintering process is performed after the nitrification process. In this case, according to a preferred exemplary embodiment of the present invention, the temperature may be increased at a slow rate by applying nitrogen gas at a predetermined pressure from the first temperature ($T_2$) to the second temperature ($T_3$), and specifically, the temperature may be increased at a rate of 0.1 to 10.0°C/min under nitrogen gas at a pressure of 0.1 MPa to 1.0 MPa. If the nitrogen gas pressure is less than 0.1 MPa, it may be difficult to suppress the decomposition of silicon nitride. In addition, if the pressure of nitrogen gas is more than 1.0 MPa, the pressure resistance of the furnace may be problematic. In addition, if the temperature increase rate from the first temperature ($T_2$) is less than 0.1°C/min, the time required for the heat treatment step may be excessively extended. In addition, when the temperature increase rate is more than 10.0°C/min, a rapid transition to the beta phase occurs, and as a result, crystal control may not be easy, because beta phase crystals grow unevenly, and the implemented substrate may have difficulty in having the desired physical properties.

According to an exemplary embodiment of the present invention, the temperature increase section from the first temperature ($T_2$) to the second temperature ($T_3$) may be performed by subdividing into two sections, through which a substrate having more excellent physical properties may be manufactured.

Specifically, it may further include a first contraction section which is heated at a rate of 0.1 to 10.0°C/min under a nitrogen gas pressure of 0.15 to 0.30 MPa from the first temperature ($T_2$) to 1,700 ± 20°C, and a second contraction section which is heated from 1,700 ± 20°C to the second temperature $(T_3)$ at a rate of 1 to 10°C/min under a nitrogen gas pressure of 0.80 to 0.98 MPa between the nitrification section and the sintering section.

In this case, the pressure of nitrogen gas may be 0.15 to 0.3 MPa in the first contraction section, and the pressure of nitrogen gas may be 0.8 to 0.9 MPa in the second contraction section. In addition, the first contraction section may be performed at a temperature increase rate of 0.1 to 10°C/min, and more preferably, 0.1 to 2°C/min. Further, in the second contraction section, the temperature may be increased at 1 to 10°C/min, and more preferably, at 1 to 5°C/min, and through this, it may be easy to achieve the objects of the present invention.

Next, the sintering process which is performed after reaching the second temperature $(T_3)$ will be described.

The second temperature $(T_3)$ may be selected within the range of 1,700 to 1,900°C. If the temperature is less than 1,700° C, the molded body may not be sufficiently densified. In addition, if the temperature is more than 1,900°C, the overgrowth and/or non-uniform growth of particles is concerned, and the mechanical strength of the implemented substrate may be reduced.

In this case, the sintering time may be adjusted depending on the above-described second temperature $(T_3)$ range, and when the second temperature $(T_3)$ is low, the sintering may be performed for a long period of time, and conversely, when the second temperature $(T_3)$ is high, relatively, the sintering may be performed for a short period of time compared to the sintering time under low temperature conditions. The sintering may be performed, for example, for 2 to 10 hours, and more preferably, for 4 to 8 hours, which is advantageous to achieve the objects of the present invention.

In addition, the sintering process may also be performed under a nitrogen gas atmosphere, and in this case, the pressure of nitrogen gas pressure may be an atmospheric condition used for sintering the silicon nitride molded body. For example, nitrogen gas may be applied at a pressure of 0.1 MPa or more, and more preferably, it may be sintered under a nitrogen gas pressure of 0.9 to 1.0 MPa, and more preferably, 0.9 to 0.98 MPa, which may be more advantageous for implementing a high-quality silicon nitride substrate.

The substrate which has undergone the sintering section (S-5) of the heat treatment step may be further subjected to a cooling section (S6), and the cooling section (S6) may follow the cooling conditions after sintering of the conventional silicon nitride substrate, and the present invention is not particularly limited thereto.

Meanwhile, for the silicon nitride substrate implemented by the above-described manufacturing method, it is possible to implement a silicon nitride substrate having a thermal conductivity of 75 W/mK or more, preferably, 80 W/mK or more, and more preferably, 90 W/mK or more, and a 3-point bending strength of 650 MPa or more, preferably, 680 MPa or more, more preferably, 700 MPa or more, and still more preferably, 750 MPa or more.

In addition, the substrate may have improved mechanical strength and thermal conductivity as it preferably includes silicon at 6 wt.% or less, more preferably, 4 wt.% or less, and still more preferably, 0 wt.% or less.

The present invention will be described in more detail through the following examples, but the following examples are not intended to limit the scope of the present invention, which should be construed to aid understanding of the present invention.

### <Example 1>

A polycrystalline silicon scrap (purity 99.99%, resistivity 1 Qcm) derived from a jig for semiconductor process was dry-ground using a jet mill to prepare metallic silicon powder having an average particle diameter of 4 μm. A ceramic composition was prepared by mixing the same with 3 mol% of yttrium oxide having an average particle diameter of 0.5 μm and 5 mol% of magnesium oxide having an average particle diameter of 0.5 μm. 100 parts by weight of the prepared ceramic composition was mixed with 80 parts by weight of ethanol as a solvent and 10 parts by weight of polyvinyl butyral as an organic binder to prepare a slurry for manufacturing a substrate, which was manufactured as a sheet-shaped molded body by using the tape casting method. After stacking 4 sheets of the manufactured molded body, it was mounted in a furnace and heat-treated under nitrogen gas atmosphere. Specifically, the temperature was increased at a temperature increase rate of 5°C/min at a pressure of 0.15 Mpa up to 900°C, and at a rate of 1.2°C/min from 900°C to 1,000°C. Thereafter, after setting the temperature increase rate at 0.5°C/min from 1,000°C to a first temperature of 1,460°C at a nitrogen gas pressure of 0.15MPa, a nitrified substrate was obtained by heat treatment at the first temperature of 1,460°C for 2 hours at a nitrogen gas pressure of 0.17 MPa. Thereafter, after slowly increasing the temperature to 1,700°C at a rate of 1°C/min at a nitrogen gas pressure of 0.2MPa, the temperature was increased to a second temperature of 1,850°C at a temperature increase rate of 4°C/min under a nitrogen gas pressure of 0.9 MPa, and it was sintered at 1,850°C for 5 hours under a nitrogen gas pressure of 0.9MPa to manufacture a silicon nitride substrate with a final thickness of 170 μm.

### <Examples 2 to 12 and Comparative Examples 1 to 4>

Silicon nitride substrates as shown in Tables 1 to 3 were manufactured in the same manner as in Example 1, except that the first temperature, the second temperature, the nitrification section pressure, the yttrium oxide content and the magnesium oxide content were changed.

**<Experimental Example>**

The following physical properties were evaluated for the silicon nitride substrates manufactured according to Examples 1 to 12 and Comparative Examples 1 to 4, and the results are shown in Tables 1 to 3 below.

**1. Evaluation of 3-point bending strength**

With respect to the silicon nitride substrates manufactured according to the examples and comparative examples, for the measurement of 3-point bending strength, by using the international standard ASTM C 1161-02C (standard Test method for Flexural strength of Advanced ceramic at Ambient Temperature), a specimen was supported by two support points at 20 mm intervals using the universal testing machine AGS-1000D (Shimadzu, Japan), and the load was applied by a crosshead moving at a speed of 1 mm per minute at the midpoint. Once the maximum load at which the specimen was destroyed was measured, the bending strength was calculated by using Calculation Formula 1 below.

$$[\text{Calculation Formula 1}]$$

$$\text{Bending strength } (\sigma) = 3 \times P \times (L/2) \times w \times t^2$$

In Calculation Formula 1, P is the maximum load, L is the length of the specimen, w is the width of the specimen, and t is the thickness of the specimen.

**2. Measurement of thermal conductivity**

With respect to the silicon nitride substrates manufactured according to the examples and comparative examples, for the measurement of thermal conductivity by the international standard ASTM E1461 (standard Test Method for Thermal Diffusivity by the laser Flash Method) method, a specimen with a thickness of approximately 500 $\mu$m was manufactured in a size of 10 mm $\times$ 10 mm in width $\times$ height, and the thermal diffusion coefficient was measured by using a laser flash apparatus (NETZCH, Germany) and calculated using Calculation Formula 2 as follows.

$$[\text{Calculation Formula 2}]$$

$$\text{Thermal conductivity } (k) = \alpha \times \rho \times Cp$$

In Calculation Formula 2, $\alpha$ is the thermal diffusion coefficient ($mm^2/S$), $\rho$ is the density ($g/cm^3$), and Cp is the heat capacity (J/(kgK)).

**3. Evaluation of surface condition after sintering**

With respect to the silicon nitride substrates manufactured according to the examples and comparative examples, the surface state after sintering was evaluated by confirming the degree of reaction of the sintered body as a phenomenon in which Si is melted and eluted without being completely nitrified (provided that in specimens where dissolution has occurred, since it is not possible to manufacture specimens for which the thermal conductivity and 3-point bending strength can be measured, it is impossible to measure the physical properties.

[Table 1]

| Classification | | Example 1 | Example 2 | Example 3 | Example 4 | Example 5 | Example 6 |
|---|---|---|---|---|---|---|---|
| Nitrification section | First temperature (°C) | 1460 | 1430 | 1400 | 1400 | 1400 | 1400 |
| | Pressure (MPa) | 0.17 | 0.17 | 0.17 | 0.08 | 0.15 | 0.23 |

(continued)

| Classification | | Example 1 | Example 2 | Example 3 | Example 4 | Example 5 | Example 6 |
|---|---|---|---|---|---|---|---|
| Sintering section | Second temperature (°C) | 1850 | 1850 | 1850 | 1850 | 1850 | 1850 |
| Rare earth element compound | Content of yttrium oxide (mol%) | 3 | 3 | 3 | 3 | 3 | 3 |
| Magnesium-containing compound | Content of magnesium oxide (mol%) | 5 | 5 | 5 | 5 | 5 | 5 |
| Mechanical strength | 3-Point bending strength (MPa) | 754 | 761 | 780 | - | 724 | - |
| Thermal conductivity (W/mK) | | 75 | 76 | 82 | - | 81 | - |
| Surface state after sintering | | Good | Good | Good | Dissolution | Good | Dissolution |

[Table 2]

| Classification | | Example 7 | Example 8 | Example 9 | Example 10 | Example 11 | Example 12 |
|---|---|---|---|---|---|---|---|
| Nitrification section | First temperature (°C) | 1400 | 1400 | 1400 | 1400 | 1400 | 1400 |
| | Pressure (MPa) | 0.17 | 0.17 | 0.17 | 0.17 | 0.17 | 0.17 |
| Sintering section | Second temperature (°C) | 1750 | 1850 | 1850 | 1850 | 1850 | 1850 |
| Rare earth element compound | Content of yttrium oxide (mol%) | 3 | 1 | 4 | 6 | 3 | 3 |
| Magnesium-containing compound | Content of magnesium oxide (mol%) | 5 | 5 | 7 | 5 | 1 | 12 |
| Mechanical strength | 3-Point bending strength (MPa) | 704 | 380 | 700 | 720 | - | 470 |
| Thermal conductivity (W/mK) | | 80 | 70 | 85 | 68 | - | 62 |
| Surface state after sintering | | Good | Good | Good | Good | Dissolution | Good |

[Table 3]

| Classification | | Comparative Example 1 | Comparative Example 2 | Comparative Example 3 | Comparative Example 4 |
|---|---|---|---|---|---|
| Nitrification section | First temperature (°C) | 1200 | 1600 | 1400 | 1400 |
| | Pressure (MPa) | 0.17 | 0.17 | 0.17 | 0.17 |
| Sintering section | Second temperature (°C) | 1850 | 1850 | 1600 | 2000 |

(continued)

| Classification | | Comparative Example 1 | Comparative Example 2 | Comparative Example 3 | Comparative Example 4 |
|---|---|---|---|---|---|
| Rare earth element compound | Content of yttrium oxide (mol%) | 3 | 3 | 3 | 3 |
| Magnesium-containing compound | Content of magnesium oxide (mol%) | 5 | 5 | 5 | 5 |
| Mechanical strength | 3-Point bending strength (MPa) | - | - | - | 454 |
| Thermal conductivity (W/mK) | | | - | - | 70 |
| Surface state after sintering | | | Dissoluti on | Not sintered | Over-sintered |

As can be confirmed in Tables 1 to 3, it can be seen that Examples 1 to 3, Example 5, Example 7 and Example 9, which satisfied all of the first temperature, second temperature, nitrification section pressure, yttrium oxide content and magnesium oxide content according to the present invention, had excellent mechanical strength and thermal conductivity and simultaneously exhibited the effect that the surface state after sintering was good at the same time, compared to Example 4, Example 6, Example 8, Examples 10 to 12 and Comparative Examples 1 to 4, which did not satisfy any one of the above.

Although one exemplary embodiment of the present invention has been described above, the spirit of the present invention is not limited to the exemplary embodiments presented herein, and those skilled in the art who understand the spirit of the present invention may easily suggest other exemplary embodiments by changing, modifying, deleting or adding components within the scope of the same spirit, but this will also fall within the scope of the present invention.

[Explanation of Reference Numerals]

1, 2: Molded body
10: BN plate
100: Stacked body

**Claims**

1. A method for manufacturing a silicon nitride ($Si_3N_4$) substrate, comprising the steps of:

   preparing a ceramic composition comprising a metal silicon powder and a crystalline phase control powder comprising a rare earth element-containing compound and a magnesium-containing compound;
   manufacturing a sheet-shaped molded body of a slurry prepared by mixing a solvent and an organic binder with the ceramic composition; and
   performing heat treatment comprising a nitrification section where heat treatment is performed at a first temperature in the range of 1,300 to 1,500°C together with the application of nitrogen gas to the molded body at a predetermined pressure and a sintering section where heat treatment is performed at a second temperature in the range of 1,700 to 1,900°C.

2. The method of claim 1, wherein the metal silicon powder is a dry-ground polycrystalline metal silicon scrap or single-crystal silicon wafer scrap in order to minimize contamination with metal impurities during grinding.

3. The method of claim 1, wherein the metal silicon powder has a resistivity of 1 to 100 $\Omega \cdot cm$.

4. The method of claim 2, wherein the polycrystalline metal silicon scrap or single-crystal metal silicon wafer scrap has a purity of 99% or more.

5. The method of claim 1, wherein the metallic silicon powder has an average particle diameter of 0.5 to 4 $\mu$m, the rare earth element-containing compound powder has an average particle diameter of 0.1 to 1 $\mu$m, and the magnesium-containing compound powder has an average particle diameter of 0.1 to 1 $\mu$m.

6. The method of claim 1, wherein the rare earth element-containing compound is yttrium oxide, and the magnesium-containing compound is magnesium oxide, and
   wherein the ceramic composition comprises 2 to 5 mol% of yttrium oxide and 2 to 10 mol% of magnesium oxide.

7. The method of claim 1, wherein the heat treatment step is performed continuously from the nitrification section to the sintering section.

8. The method of claim 1, wherein the heat treatment step is performed at a temperature increase rate of 0.1 to 2°C/min while applying nitrogen gas at a pressure of 0.1 to 0.2 MPa from 1,000 $\pm$ 20°C to the first temperature.

9. The method of claim 1, wherein in the nitrification section, nitrogen gas is applied at a pressure of 0.1 to 0.2 MPa, and the nitrification section is performed for 2 to 10 hours.

10. The method of claim 8, wherein the pressure of nitrogen gas applied from 1,000 $\pm$ 20°C to the first temperature is lower than the pressure of nitrogen gas applied in the nitrification section.

11. The method of claim 1, further comprising:
    a first contraction section which is heated at a rate of 0.1 to 10.0°C/min under a nitrogen gas pressure of 0.15 to 0.30 MPa from the first temperature to 1,700 $\pm$ 20°C, and a second contraction section which is heated from 1,700 $\pm$ 20°C to the second temperature at a rate of 1 to 10°C/min under a nitrogen gas pressure of 0.80 to 0.98 MPa between the nitrification section and the sintering section.

12. The method of claim 1, wherein the heat treatment step is performed on the sheet-shaped molded body in a state where several sheets are stacked.

13. A silicon nitride substrate, which is manufactured through the method according to any one of claims 1 to 12, wherein the thermal conductivity is 75W/mK or more, and the 3-point bending strength is 700 MPa or more.

【FIG. 1】

【FIG. 2】

(a)

(b)

## INTERNATIONAL SEARCH REPORT

| International application No. |
|---|
| **PCT/KR2022/006365** |

### A. CLASSIFICATION OF SUBJECT MATTER

**C04B 35/584**(2006.01)i; **C04B 35/64**(2006.01)i; **C04B 35/632**(2006.01)i

According to International Patent Classification (IPC) or to both national classification and IPC

### B. FIELDS SEARCHED

Minimum documentation searched (classification system followed by classification symbols)

C04B 35/584(2006.01); B32B 18/00(2006.01); B32B 3/30(2006.01); C04B 35/591(2006.01); C04B 35/622(2006.01); C04B 35/64(2006.01); C08K 3/10(2006.01); H05K 1/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 질화 규소 기판(silicon nitride substrate), 금속 실리콘 분말(metal silicon powder), 희토류 원소(containing rare earth elements), 마그네슘(magnesium), 질화(nitrification), 소결(sintering)

### C. DOCUMENTS CONSIDERED TO BE RELEVANT

| Category* | Citation of document, with indication, where appropriate, of the relevant passages | Relevant to claim No. |
|---|---|---|
| X | KR 10-2016-0111005 A (JAPAN FINE CERAMICS CO., LTD.) 23 September 2016 (2016-09-23) See paragraphs [0039], [0046], [0068], [0076], [0106], [0112], [0115] and [0117]; claim 1; and table 1. | 1,3,5-13 |
| Y | | 2,4 |
| Y | KR 10-2017-0135105 A (KOREA INSTITUTE OF CERAMIC ENGINEERING AND TECHNOLOGY) 08 December 2017 (2017-12-08) See claim 11. | 2,4 |
| A | KR 10-2021-0035356 A (OCI COMPANY LTD.) 01 April 2021 (2021-04-01) See entire document. | 1-13 |
| A | US 6447923 B1 (YAMAKAWA, Akira) 10 September 2002 (2002-09-10) See entire document. | 1-13 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 August 2022** | **10 August 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2022/006365**

| C. | DOCUMENTS CONSIDERED TO BE RELEVANT | |
|---|---|---|
| Category* | Citation of document, with indication, where appropriate, of the relevant passages | Relevant to claim No. |
| A | US 2011-0272187 A1 (KAGA, Youichirou et al.) 10 November 2011 (2011-11-10)<br>See entire document. | 1-13 |

Form PCT/ISA/210 (second sheet) (July 2019)

INTERNATIONAL SEARCH REPORT
Information on patent family members

International application No.

**PCT/KR2022/006365**

| Patent document cited in search report | | | Publication date (day/month/year) | Patent family member(s) | | | Publication date (day/month/year) |
|---|---|---|---|---|---|---|---|
| KR | 10-2016-0111005 | A | 23 September 2016 | CN | 106132908 | A | 16 November 2016 |
| | | | | CN | 106132908 | B | 25 August 2017 |
| | | | | JP | 2015-199657 | A | 12 November 2015 |
| | | | | JP | 5836522 | B2 | 24 December 2015 |
| | | | | KR | 10-1751531 | B1 | 27 June 2017 |
| | | | | US | 2016-0362592 | A1 | 15 December 2016 |
| | | | | US | 9938444 | B2 | 10 April 2018 |
| | | | | WO | 2015-152292 | A1 | 08 October 2015 |
| KR | 10-2017-0135105 | A | 08 December 2017 | | None | | |
| KR | 10-2021-0035356 | A | 01 April 2021 | WO | 2021-054788 | A1 | 25 March 2021 |
| US | 6447923 | B1 | 10 September 2002 | EP | 0908429 | A1 | 14 April 1999 |
| | | | | EP | 0908429 | B1 | 27 November 2002 |
| | | | | JP | 11-079872 | A | 23 March 1999 |
| US | 2011-0272187 | A1 | 10 November 2011 | EP | 2377839 | A1 | 19 October 2011 |
| | | | | EP | 2377839 | A4 | 15 August 2012 |
| | | | | EP | 2377839 | B1 | 26 October 2016 |
| | | | | JP | 5673106 | B2 | 18 February 2015 |
| | | | | US | 8858865 | B2 | 14 October 2014 |
| | | | | WO | 2010-082478 | A1 | 22 July 2010 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210058595

- KR 1019977000234